# EUROPÄISCHE PATENTSCHRIFT

(11) **EP 2 933 653 B1**
(45) Veröffentlichungstag und Bekanntmachung des Hinweises auf die Patenterteilung: **26.07.2017**
(21) Anmeldenummer: 14164917.8
(22) Anmeldetag: 16.04.2014
(51) Int. Cl.: G01S 13/74

(54) **Verfahren zur Optimierung der Lokalisierungsgenauigkeit eines RFID-Tags in einem ultrahochfrequenten Funkbereich bei einem System zur Lokalisierung von RFID-Tags umfassend mehrere Lesegeräte**
Method for optimising the location accuracy of an RFID tag in an ultra high frequency radio range in a system for the localisation of RFID tags comprising a plurality of readers
Procédé d'optimisation de la précision de localisation d'une balise RFID dans une zone radio à ultra haute fréquence pour un système destinée à la localisation de balises RFID comprenant plusieurs appareils de lecture

(43) Veröffentlichungstag der Anmeldung: 21.10.2015
(73) Patentinhaber: SKIDATA AG, 5083 Grödig/Salzburg (AT)
(72) Erfinder: Schlechter, Thomas, 5201 Seekirchen am Wallersee (AT)
(74) Vertreter: Karakatsanis, Georgios

(56) Entgegenhaltungen:
- US-A1- 2009 219 158

## Beschreibung

Die vorliegende Erfindung bezieht sich auf ein Verfahren zur Optimierung der Lokalisierungsgenauigkeit eines RFID-Tags in einem ultrahochfrequenten Funkbereich bei einem System zur Lokalisierung von RFID-Tags umfassend mehrere Lesegeräte, gemäß dem Oberbegriff des Patentanspruchs 1.

Die RFID Technologie, insbesondere im ultrahochfrequenten Funkbereich (UHF), ist dem Fachmann bestens bekannt und findet seit geraumer Zeit in diversen Anwendungen Einsatz. Dazu zählen Anwendungen im Logistikbereich, im Bereich der Personen- und KFZ-Identifikation aber auch Anwendungen im Bereich der Indoor-Navigation. Hierbei umfassen Lokalisierungssysteme für RFID-Tags (RFID-Transponder) in einem ultrahochfrequenten Funkbereich ein oder mehrere UHF-Lesegeräte sowie eine vielzahl aktiver und/oder passiver UHF-RFID-Tags. Je nach Systemausprägung sind entweder die Lesegeräte oder die UHF-RFID-Tags mobil, während der jeweilige Counterpart, d.h. die UHF-RFID-Tags oder die Lesegeräte, ortsfest ausgeführt sind.

Grundsätzlich kann man vorhandene Lesegeräte - RFID-Tags-Systeme in zwei Klassen einteilen. Zum Einen existieren Systeme zur Identifikation einer Person oder eines Gegenstands mit Hilfe einer eineindeutigen Kennzeichnung des RFID-Tags, die zumindest einem Lesegerät mitgeteilt wird, sobald sich der RFID-Tag im Lesebereich des zumindest einem Lesegerätes befindet. Zum Anderen existieren Systeme zur Lokalisierung eines RFID-Tags mittels aus dem Stand der Technik bekannter Verfahren der Lokalisierung.

Als Verfahren zur Lokalisierung eines RFID-Tags werden beispielsweise Two-Way-Ranging (TWR), signalstärke-basierte Ansätze (RSSI-based), Time-Difference-of-Arrival-(TDOA), Time-of-Arrival- (TOA) oder Phase-Difference-of-Arrival- (PDOA) Verfahren eingesetzt, die dem Fachmann bestens bekannt sind. Dabei sind, ausgenommen bei TWR- und RSSI-Verfahren, mehrere ortsfest installierte Lesegeräte zur Lokalisierung eines RFID-Tags erforderlich.

Bei Systemen mit einem oder mehreren Lesegeräten zur Lokalisierung eines UHF-RFID-Tags ist eine komplette Abdeckung des interessierenden Bereichs nicht notwendigerweise gegeben, da beispielsweise UHF-Wellen von metallischen Flächen und Gegenständen abgeschirmt, reflektiert und gebeugt werden. Die Reflektionen können sich dabei sowohl überlagern, was zu einer Verstärkung oder im Extremfall zu einer Auslöschung führen kann, als auch über Mehrwegeausbreitung vielfach am Empfänger ankommen, wodurch die Lokalisierungsgenauigkeit erheblich verschlechtert wird. Bei Systemen umfassend mehrere Lesegeräte kann es zwischen den von den einzelnen Lesegeräten ausgesandten UHF-Signalen zu Überlagerungen kommen, welche sich negativ auf die Detektions- und Lokalisierungsgenauigkeit auswirken.

Um die Detektions- und Lokalisierungsgenauigkeit bei derartigen Systemen zur Lokalisierung eines UHF-RFID-Tags zu verbessern, ist bekannt, die interessierende Umgebung bereits vor Installation eines Systems entsprechend zu vermessen bzw. die UHF-Feldverteilung der Lesegeräte im Raum vorab zu simulieren. Dadurch wird eine optimierte Positionierung der Lesegeräte im Raum ermöglicht, um ein Maximum an Performance, d.h. eine optimale Abdeckung und ein optimales Interferenzmuster, zu gewährleisten.

Durch diese Vorgehensweise wird jedoch lediglich ein statisches Problem in Abhängigkeit der Umgebung gelöst. Dynamische Änderungen, die z.B. entstehen, wenn eine Person den Raum betritt, werden hiermit in nachteiliger Weise nicht erfasst.

Um dieses Problem zu lösen, ist bei Systemen umfassend mehrere Lesegeräte vorgeschlagen worden, ortsfest installierte Referenz-RFID-Tags vorzusehen, wobei das Antwortverhalten dieser Tags im laufenden Betrieb untersucht wird, um Informationen über die Feldverteilung im Raum zu gewinnen. Diese dynamischen Messergebnisse erlauben eine Optimierung der aktuellen Lesegerätekonfiguration, um wiederum die Performance des Systems zu optimieren.

Da die Referenz-RFID-Tags ortsfest installiert sind und somit zum festen Bestandteil des Gesamtsystems gehören kann davon ausgegangen werden, dass deren Antwortverhalten auf ein definiertes UHF-Feld genau vorhergesagt werden kann. Statistische Unsicherheiten wie bei unbekannten Tags an zu identifizierenden Gegenständen oder Personen können in vorteilhafter Weise minimiert werden, indem die Tags vor der Installation verlesen und vermessen werden. Da diese Referenztags somit in bekannter Weise auf eine Erregung im UHF-Feld reagieren, kann über deren Antwortverhalten auf die aktuelle Feldverteilung im Raum geschlossen werden.

In diesem Zusammenhang können Referenzmessungen und die entsprechende Feldverteilung in Lookuptabellen abgelegt werden, wobei auf Grundlage der Antworten der Referenz-Tags die Feldverteilung mit der höchsten Korrelation ausgewählt wird. Ein Vorteil dieser Herangehensweise ist, dass vergleichsweise wenige Referenz-Tags und somit wenige Referenzmessungen notwendig sind.

Alternativ zu diesem Ansatz ist es auch möglich beliebige Szenarien dynamisch zu untersuchen, wobei für eine ausreichende Genauigkeit jedoch zahlreiche im zu untersuchenden Raum verteilte Referenz-Tags und viele Referenzmessungen erforderlich sind, die in nachteiliger Weise in einem Rückgang der effektiven Leserate der zu identifizierenden Objekte oder Personen resultiert. In der Praxis bieten sich als Kompromiss hybride Lösungen an, welche auf beide vorgenannten Verfahren wechselseitig zurückgreifen können.

Für Systeme mit einem oder mehreren Lesegeräten zur Identifikation eines UHF-RFID-Tags ist zudem bekannt, die Basisparameter Phase, Amplitude und Frequenz der einzelnen Lesegeräte zufällig zu variieren. Hierbei entstehen im Raum bedingt durch die wechselnde konstruktive und destruktive Überlagerung der UHF-Wellen der einzelnen Lesegeräte Hot-Spots, d.h. Stellen mit maximaler Amplitude und Cold-Spots, d.h. Stellen mit minimaler Amplitude. Befindet sich ein RFID-Tag in einem Cold-Spot, ist nicht genügend Energie im UHF-Feld verfügbar, welche es dem RFID-Tag ermöglichen würde auf die Anfrage eines oder mehrerer Lesegeräte zu antworten. Durch die Variation der genannten Basisparameter werden die Hot- und Cold-Spots im Raum, abhängig von der aktuellen Konfiguration der Leser verschoben, wodurch ein sich in einem Cold-Spot befindlicher RFID-Tag im Anschluss in einem Bereich mit hoher Feldenergie befindet, was die Identifikation des RFID-Tags ermöglicht.

Der vorliegenden Erfindung liegt die Aufgabe zugrunde, ein Verfahren zur Optimierung der Lokalisierungsgenauigkeit eines RFID-Tags in einem ultrahochfrequenten Funkbereich bei einem System zur Lokalisierung von RFID-Tags umfassend mehrere Lesegeräte anzugeben.

Diese Aufgabe wird durch die Merkmale des Patentanspruchs 1 gelöst. Weitere erfindungsgemäße Ausgestaltungen und Vorteile gehen aus dem Unteranspruch hervor.

Demnach wird ein Verfahren zur Optimierung der Lokalisierungsgenauigkeit eines RFID-Tags in einem ultrahochfrequenten Funkbereich (d.h. vorzugsweise in einem Bereich mit einer Frequenz zwischen 300 MHz und 3 GHz) bei einem System zur Lokalisierung von RFID-Tags umfassend mehrere Lesegeräte vorgeschlagen, im Rahmen dessen zunächst eine erste Lokalisierung des RFID-Tags mittels aus dem Stand bekannter Verfahren durchgeführt wird, wobei zu diesem Zweck der RFID-Tag von zumindest einem Lesegerät erfasst wird, wobei anschließend mittels einer vorgegebenen Variation der Phasenlage, der Frequenz und/oder der Sendeamplitude der einzelnen Lesegeräte gezielt Cold-Spots, d.h. Stellen mit minimaler Amplitude im Raum erzeugt bzw. verschoben werden, deren Lage und Volumen als Funktion der Phasenlage, der Frequenz und der Sendeamplitude der einzelnen Lesegeräte anhand von Simulationen und/oder Messungen bekannt ist, wobei wenn ein RFID-Tag von keinem Lesegerät mehr erfasst wird, sich dieser in einem Cold-Spot befindet, der anhand der ersten, groben Lokalisierung des RFID-Tags mittels aus dem Stand bekannter Verfahren identifiziert wird, wodurch eine genaue Lokalisierung des RFID-Tags ermöglicht wird.

Als Verfahren zur ersten Lokalisierung des RFID-Tags können z.B. Two-Way-Ranging (TWR), signalstärke-basierte Verfahren (RSSI-based), Time-Difference-of-Arrival- (TDOA), Time-of-Arrival- (TOA) oder Phase-Difference-of-Arrival- (PDOA) Verfahren eingesetzt werden.

Im Rahmen einer Weitrerbildung der Erfindung wird zumindest ein ortsfest angeordneter Referenz-RFID-Tag zur dynamischen Messung der Feldverteilung verwendet, wobei das Antwortverhalten des zumindest einen Referenz-Tags im laufenden Betrieb untersucht wird, um Informationen über die Feldverteilung im Raum zu gewinnen.

Durch die erfindungsgemäße Konzeption wird die Lokalisierungsgenauigkeit eines RFID-Tags in einem ultrahochfrequenten Funkbereich bei einem System zur Lokalisierung von RFID-Tags umfassend mehrere Lesegeräte optimiert, ohne die Systemkomponenten zu verändern. Somit können bestehende Systeme weiterhin verwendet werden, was in einer Erhöhung der Lokalisierungsgenauigkeit bei niedrigen Kosten resultiert. Die RFID-Tags können als aktive (d.h. als Tags mit eigener Energieversorgung) oder als passive RFID-Tags ausgeführt sein.

Die Erfindung wird im folgenden anhand der beigefügten Figuren, welche eine stark vereinfachte Simulation eines möglichen Szenarios darstellen, beispielhaft näher erläutert.

In den beigefügten Figuren ist ein Raum dargestellt, dessen Eckpunkte durch die Koordinaten {(1,1) (1,-1) (-1,-1) (-1,1)} gegeben sind. Im Raum befinden sich zwei ortsfest installierte Lesegeräte, welche als große schwarze Punkte in den Eckpunkten {(-1, -1) (1, -1)} dargestellt sind und mit den Bezugszeichen 1, 2 versehen sind. Ferner befinden sich im Raum zwei Gegenstände 3, 4, welche in der zweidimensionalen Darstellung in den Figuren exemplarisch als Dreiecke ausgeführt sind.

Durch die Gegenstände 3, 4 wird das UHF-Feld der Lesegeräte 1, 2 abgeschirmt, so dass in Bereichen hinter den Gegenständen kein UHF-Feld mehr wahrnehmbar ist. Zudem werden die von den Lesegeräten 1, 2 gesendeten UHW-Wellen von den Gegenständen 3, 4 an den Auftrittsflächen reflektiert, was durch virtuelle Strahlungsquellen 5, 6, 7, 8 modelliert wird, welche in den Figuren als kleine schwarze Punkte an den weißen Dreiecken 3, 4 dargestellt sind.

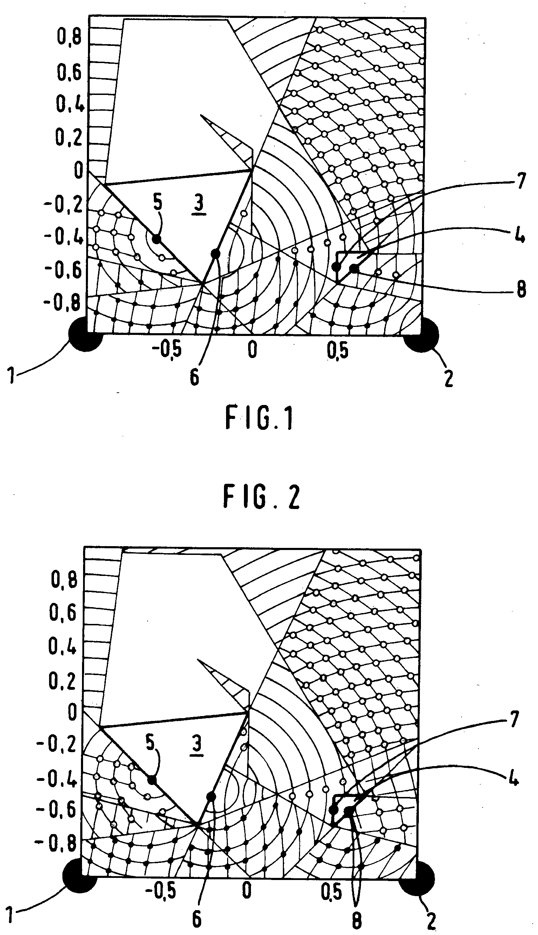

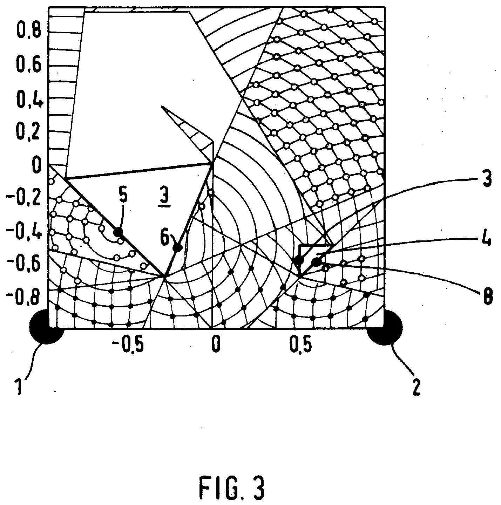

Die Rückwirkung bei Abfrage durch das Funkfeld der Lesegeräte 1, 2 antwortender UHF-RFID-Tags kann auf dieselbe Art modelliert werden. Diese sehr stark vereinfachte Simulationsumgebung zeigt in Figur 1 bereits, dass sich durch die Überlagerung der einzelnen Quellen eine spezielle Verteilung von Hot-Spots und Cold-Spots im Raum ergibt. In Figur 1 liegt zwischen den ausgesandten UHF-Signalen der beiden Lesegeräte 1, 2 keine Phasenverschiebung vor. In Figur 2 beträgt die Phasenverschiebung zwischen den ausgesandten UHF-Signalen der beiden Lesegeräte 1, 2 n/3, während sie in Figur 3 2π/3 beträgt.

Bezugnehmend auf die beigefügten Figuren ist zu erkennen, dass sich die Lage der Hot-Spots (dunkle Punkte) und Cold-Spots (weisse Punkte) allein durch eine grobe Variation der Phasen der ausgesandten UHF-Signalen der Lesegeräte beeinflussen lässt. Mit Hilfe von aus dem Stand der Technik bekannten Verfahren zur Simulation von UHF-Umgebungen, Analyse der notwendigen Phasenlagen, der Frequenzunterschiede und der Amplitudenunterschiede zwischen den einzelnen Lesegeräten lässt sich eine Vorhersage über die Lage und das Volumen der Hot-Spots und Cold-Spots im betreffenden Raum treffen. Ferner kann zumindest ein ortsfest angeordneter Referenz-RFID-Tag zur dynamischen Messung der Feldverteilung verwendet werden.

Gemäß der Erfindung wird vorgeschlagen, mittels einer vorgegebenen Variation der Phasenlage, der Frequenz und/oder der Sendeamplitude der einzelnen Lesegeräte Cold-Spots gezielt zu erzeugen oder zu verschieben, um die Lage interessierender RFID-Tags im Raum nach einer ersten nach dem Stand der Technik durchgeführten Lokalisierung genauer zu bestimmen und somit eine optimierte Lokalisierung zu ermöglichen. Wenn ein RFID-Tag nicht auf das UHF-Feld der Lesegeräte reagiert bzw. nicht antwortet, so befindet er sich in einem Cold-Spot, der anhand der vorangehenden, ersten, groben Lokalisierung des RFID-Tags mittels aus dem Stand der Technik bekannter Verfahren identifiziert wird. Der Cold-Spot, in dem sich der RFID-Tag befindet, ist derjenige Cold-Spot, der den anhand der vorangehenden, ersten, groben Lokalisierung des RFID-Tags mittels aus dem Stand bekannter Verfahren ermittelten Koordinaten am nächsten ist.

Da die Lage und das Volumen der Cold-Spots als Funktion der Phasenlage, der Frequenz und der Sendeamplitude der einzelnen Lesegeräte anhand von Simulationen und/oder Messungen bekannt sind, ist somit auch die genaue Position des RFID-Tags bekannt.

## Patentansprüche

1. Verfahren zur Optimierung der Lokalisierungsgenauigkeit eines RFID-Tags in einem ultrahochfrequenten Funkbereich bei einem System zur Lokalisierung von RFID-Tags umfassend mehrere Lesegeräte, **dadurch gekennzeichnet, dass** zunächst eine erste Lokalisierung des RFID-Tags mittels Two-Way-Ranging (TWR)-Verfahren, signalstärke-basierter Ansätze (RSSI-based), Time-Difference-of-Arrival- (TDOA)-Verfahren, Time-of-Arrival- (TOA) -Verfahren oder Phase-Difference-of-Arrival- (PDOA) -Verfahren durchgeführt wird, wobei zu diesem Zweck in Abhängigkeit des zur ersten Lokalisierung herangezogenen Verfahrens der RFID-Tag von zumindest einem Lesegerät (1, 2) bei Verwendung von Two-Way-Ranging (TWR)-Verfahren oder signalstärke-basierten Ansätzen (RSSI-based) zur ersten Lokalisierung bzw. von mehreren Lesegeräten (1, 2) bei Verwendung von Time-Difference-of-Arrival-(TDOA)- Time-of-Arrival- (TOA)- oder Phase-Difference-of-Arrival-(PDOA)-Verfahren zur ersten Lokalisierung, erfasst wird, wobei anschließend mittels einer vorgegebenen Variation der Phasenlage, der Frequenz und/oder der Sendeamplitude der einzelnen Lesegeräte gezielt Cold-Spots, d.h. Stellen mit minimaler Amplitude im Raum erzeugt oder verschoben werden, deren Lage und Volumen als Funktion der Phasenlage, der Frequenz und der Sendeamplitude der einzelnen Lesegeräte anhand von Simulationen und/oder Messungen bekannt ist, wobei wenn ein RFID-Tag von keinem Lesegerät (1, 2) mehr erfasst wird, sich dieser in einem Cold-Spot befindet, der den anhand der ersten Lokalisierung des RFID-Tags ermittelten Koordinaten am nächsten ist.

2. Verfahren zur Optimierung der Lokalisierungsgenauigkeit eines RFID-Tags in einem ultrahochfrequenten Funkbereich bei einem System zur Lokalisierung von RFID-Tags umfassend mehrere Lesegeräte, nach Anspruch 1, **dadurch gekennzeichnet, dass** zumindest ein ortsfest angeordneter Referenz-RFID-Tag zur dynamischen Messung der Feldverteilung verwendet wird, wobei das Antwortverhalten des zumindest einen Referenz-Tags im laufenden Betrieb untersucht wird, um Informationen über die Feldverteilung im Raum zu gewinnen.

## Claims

1. A method for optimizing the locating accuracy of an RFID tag in an ultra-high-frequency radio range of a system for locating RFID tags comprising multiple reading devices, **characterized in that** a first locating of the RFID tag is initially carried out by means of Two-Way-Ranging (TWR) methods, signal strength-based (RSSI-based) approaches, Time-Difference-of-Arrival (TDOA) methods, Time-of-Arrival (TOA) methods or Phase-Difference-of-Arrival (PDOA) methods, wherein the RFID tag is for this purpose detected by at least one reading device (1, 2) if Two-Way-Ranging (TWR) methods or signal strength-based (RSSI-based) approaches are used for the first locating or by multiple reading devices (1, 2) if Time-Difference-of-Arrival (TDOA), Time-of-Arrival (TOA) or Phase-Difference-of-Arrival (PDOA) methods are used for the first locating, wherein cold spots, i.e. points with minimal amplitude in space, subsequently are purposefully generated or shifted by means of a predefined variation of the phase position, the frequency and/or the transmission amplitude of the individual reading devices and the location and volume of said cold spots as a function of the phase position, the frequency and/or the transmission amplitude of the individual reading devices is known based on simulations and/or measurements, and wherein an RFID tag, which is no longer detected by any reading device (1, 2), is located in a cold spot that lies closest to the coordinates determined based on the first locating of the RFID tag.

2. The method for optimizing the locating accuracy of an RFID tag in an ultra-high-frequency radio range of a system for locating RFID tags comprising multiple reading devices according to claim 1, **characterized in that** at least one stationarily arranged reference RFID tag is used for dynamically measuring the field distribution, wherein the response behavior of the at least one reference tag is analyzed during the operation of the system in order to obtain information on the field distribution in space.

## Revendications

1. Procédé pour optimiser la précision de localisation d'une étiquette d'identification par radiofréquence (RFID) dans une zone radio à ultrahautes fréquences pour un système destiné à la localisation d'étiquettes RFID comprenant plusieurs lecteurs, **caractérisé en ce qu'**une première localisation d'étiquette RFID est d'abord exécutée au moyen d'un procédé de télémétrie bidirectionnelle (TWR), d'éléments basés sur l'indication de la puissance de signal reçu (RSSI), d'un procédé de Différence d'heure d'arrivée (TDOA), d'un procédé d'Heure d'arrivée (TOA), ou d'un procédé de Différence de phase d'arrivée (PDOA), l'étiquette d'identification par radiofréquence (RFID) d'au moins un lecteur (1, 2) étant saisie dans ce but en fonction du procédé utilisé pour la première localisation en utilisant des procédés de télémétrie bidirectionnelle (TWR) ou d'éléments basés sur l'indication de la puissance de signal reçu (RSSI) pour la première localisation ou de plusieurs lecteurs (1, 2) en utilisant des procédés de Différence d'heure d'arrivée (TDOA), d'Heure d'arrivée (TOA) ou de Différence de phase d'arrivée (PDOA) pour la première localisation, des points froids étant ensuite générés ou déplacés dans l'espace de manière précise au moyen d'une variation prédéfinie de position de phase, de la fréquence et/ou de l'amplitude d'émission des lecteurs individuels, c'est-à-dire des points avec amplitude minimale, dont la position et le volume sont connus en tant que fonction de la position de phase, de la fréquence et de l'amplitude d'émission des lecteurs individuels à l'aide de simulations et/ou de mesures, si une étiquette d'identification par radiofréquence (RFID) n'est plus saisie par aucun lecteur (1, 2), celle-ci se trouvant dans un point froid, qui est au plus proche des coordonnées déterminées à l'aide de la première localisation de l'étiquette d'identification par radiofréquence (RFID).

2. Procédé pour optimiser la précision de localisation d'une étiquette d'identification par radiofréquence (RFID) dans une zone radio à ultrahautes fréquences pour un système destiné à la localisation d'étiquettes d'identification par radiofréquence (RFID) comprenant plusieurs lecteurs selon la revendication 1, **caractérisé en ce qu'**au moins une étiquette d'identification par radiofréquence (RFID) de référence disposée de manière fixe pour la mesure dynamique de la répartition de champ est utilisée, le comportement de réponse d'au moins une étiquette de référence est analysé en cours de fonctionnement pour acquérir des informations sur la répartition de champ dans l'espace.
